# EUROPEAN PATENT APPLICATION

(11) **EP 4 741 464 A1**
(43) Date of publication of application: **13.05.2026**
(21) Application number: 25213430.9
(22) Date of filing: 04.11.2025
(51) Int. Cl.: C09D 11/322, C09D 11/106, C09D 11/326

(54) **INKJET INK AND INKJET RECORDING APPARATUS**

(30) Priority: 06.11.2024 JP 2024194305
(71) Applicant: KYOCERA Document Solutions Inc., Osaka-shi, Osaka 540-8585 (JP)
(72) Inventor: SATO, Satoshi, Osaka-shi, Osaka, 540-8585 (JP)
(74) Representative: Viering, Jentschura & Partner mbB Patent- und Rechtsanwälte

(57) **Abstract**

An ink includes: a quinacridone pigment; a pigment dispersion resin; and an aqueous medium. Maximum absorbance at a wavelength of 300 nm or more and 350 nm or less in an ultraviolet-visible light absorption spectrum of a 25-fold diluted solution of a supernatant liquid obtained by centrifuging the ink at 23°C and 140,000 rpm for 3 hours is 0.16 or more and 0.40 or less, and absorbance at 429 nm is 0.002 or less. In the ink, the number of coarse particles having a particle diameter of 500 nm or more is 4.0 × 10⁸/mL or less. A 50-fold diluted solution of the supernatant liquid has a phosphorus concentration of 1.0 ppm or more and 16.0 ppm or less.

## Description

### Field

The present disclosure relates to an inkjet ink including a quinacridone pigment, and an inkjet recording apparatus.

### Background

Japanese Patent Application Laid-open No. 2000-273383 and Japanese Patent Application Laid-open No. 2002-167534 disclose inkjet inks for recording an image on a recording medium such as paper. Inkjet inks desired to have high ejection stability when ejected from a nozzle of a recording head. In the inkjet ink disclosed in Japanese Patent Application Laid-open No. 2000-273383, a pigment derivative is blended in order to improve ejection stability. In the inkjet ink disclosed in Japanese Patent Application Laid-open No. 2002-167534, ejection stability is improved on the basis of the increase rate of the average particle diameter of a coloring agent when concentrated.

### Summary

According to an embodiment of the present disclosure, there is provided an inkjet ink, including: a quinacridone pigment; a pigment dispersion resin; and an aqueous medium.

Maximum absorbance at a wavelength of 300 nm or more and 350 nm or less in an ultraviolet-visible light absorption spectrum of a 25-fold diluted solution of a supernatant liquid obtained by centrifuging the inkjet ink at 23°C and 140,000 rpm for 3 hours is 0.16 or more and 0.40 or less, and absorbance at 429 nm is 0.002 or less.

In the inkjet ink, the number of coarse particles having a particle diameter of 500 nm or more is 4.0 × 10⁸/mL or less.

A 50-fold diluted solution of the supernatant liquid has a phosphorus concentration of 1.0 ppm or more and 16.0 ppm or less.

an inkjet recording apparatus according to an embodiment of the present disclosure includes: a conveying unit that conveys a recording medium; and a line type recording head that ejects an ink onto the recording medium.

The ink includes the above inkjet ink.

### Brief Description of Figures

Fig. 1 is a diagram showing an inkjet recording apparatus according to an embodiment of the present disclosure; and
Fig. 2 is a diagram showing the lower surface of the recording head of the inkjet recording apparatus.

### Detailed Description

In Japanese Patent Application Laid-open No. 2000-273383 and Japanese Patent Application Laid-open No. 2002-167534, the effects of coarse particles generated during the dispersion of the pigments, intermediates generated during the synthesis of pigments, catalysts used for synthesizing pigments, and the like are not considered in relation to ejection stability. Further, inkjet inks are desired to have high rubfastness in the image formed on a recording medium and high redispersibility in a cleaning solution during the maintenance of the ejection surface of the recording head.

In view of the circumstances as described above, it is an object of the present disclosure to provide an inkjet ink having ejection stability, rubfastness, and cleanability.

Embodiments of the present disclosure will be described.

### [Inkjet ink]

An inkjet ink according to an embodiment of the present disclosure (hereinafter, also referred to simply as an "ink") includes a quinacridone pigment; a pigment dispersion resin and an aqueous medium. In the ink according to this embodiment, the pigment dispersion resin includes an adsorbed resin adsorbed on the quinacridone pigment, and an unadsorbed resin that is not adsorbed on the quinacridone pigment and is free in the aqueous medium, and the quinacridone pigment and the adsorbed resin constitute the pigment dispersion. In the ink according to this embodiment, by controlling the amounts of the unadsorbed resin, an intermediate generated during the synthesis of a quinacridone pigment (hereinafter, also referred to simply as an "intermediate"), coarse particles, and a phosphorus-containing catalyst used for synthesizing a quinacridone pigment, it is possible to realize a configuration having ejection stability, rubfastness, and cleanability. Note that in the present disclosure, the coarse particles refer to particles having a particle diameter of 500 nm or more.

The amount of the unadsorbed resin in the ink according to this embodiment can be known using the ultraviolet-visible light absorption spectrum of a 25-fold diluted solution of a supernatant liquid obtained by centrifuging the ink at 23°C and 140,000 rpm for 3 hours (hereinafter, also referred to simply as a "supernatant liquid"). That is, it can be seen that the higher the maximum absorbance of the peak appearing in the wavelength range of 300 nm or more and 350 nm or less in this ultraviolet-visible light absorption spectrum, the greater the amount of the unadsorbed resin in the ink. In the ink according to this embodiment, the amount of the unadsorbed resin is controlled such that the maximum absorbance at a wavelength of 300 nm or more and 350 nm or less in this ultraviolet-visible light absorption spectrum is 0.16 or more and 0.40 or less. Further, in the ink according to this embodiment, the ratio of the unadsorbed resin in the pigment dispersion resin is favorably controlled to be 20% or more and 50% or less.

The amount of the intermediate in the ink according to this embodiment can be known using the absorbance at 429 nm in the ultraviolet-visible light absorption spectrum of the 25-fold diluted solution of the supernatant liquid. That is, it can be seen that the higher the absorbance at 429 nm in this ultraviolet-visible light absorption spectrum, the greater the amount of the intermediate in the ink. In the ink according to this embodiment, the amount of the intermediate needs to be small and the absorbance at 429 nm in this ultraviolet-visible light absorption spectrum is controlled to be 0.002 or less.

In the ink according to this embodiment, the fewer the number of coarse particles, the more favorable. Examples of the coarse particles that can be included in the ink according to this embodiment include the unadsorbed resin, the intermediate, and the phosphorus-containing catalyst that have agglomerated in the aqueous medium. The number of coarse particles in the ink is counted on the basis of the measurement result obtained using a laser light scattering particle size distribution analyzer. In the ink according to this embodiment, the number of coarse particles is controlled to be 4.0 × 10⁸/mL or less.

The amount of the phosphorus-containing catalyst in the ink according to this embodiment can be known using the phosphorus concentration in the 50-fold diluted solution of the supernatant liquid. That is, in the ink according to this embodiment, substantially all phosphorus can be regarded to originate from the phosphorus-containing catalyst. In the ink according to this embodiment, the amount of the phosphorus-containing catalyst is controlled such that the phosphorus concentration in the 50-fold diluted solution of the supernatant liquid is 1.0 ppm or more and 16.0 ppm or less. When the phosphorus concentration exceeds 16.0 ppm, the phosphorus-containing catalyst adheres to the ejection surface of the recording head and the inner wall of the nozzle hole, making it easier for ejection stability to be impaired. Further, when the phosphorus concentration is less than 1.0 ppm, sufficient redispersibility in the cleaning solution is not achieved, and cleanability is easily impaired.

### [Quinacridone pigment]

Examples of the quinacridone pigment that can be used in the ink according to this embodiment include quinacridone magenta, quinacridone red, quinacridone orange, quinacridone gold, and quinacridone violet.

An example of the method of synthesizing the quinacridone pigment will be described. The quinacridone pigment is, for example, a compound represented by the following formula (D). The quinacridone pigment is synthesized by, for example, carrying out the reactions represented by reaction formulae (r-a), (r-b), and (r-c).

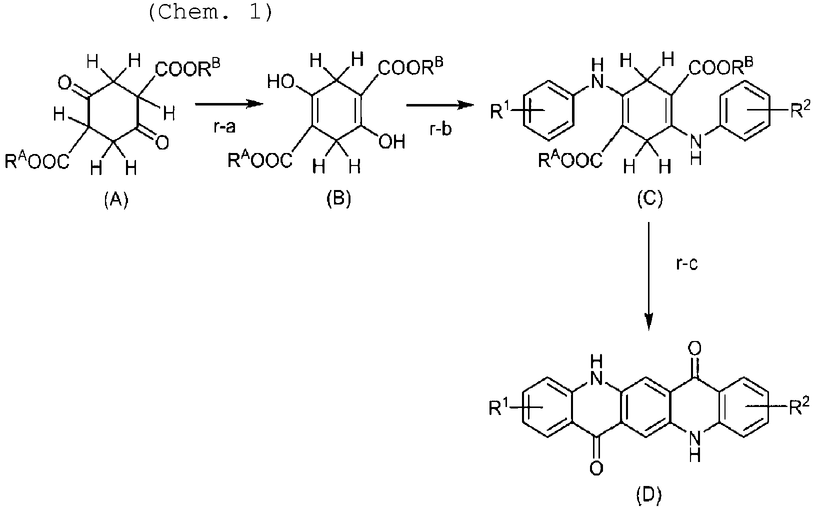

In the formulae (A), (B), (C), and (D), R^{A}, R^{B}, R¹, and R² each independently represent a monovalent group. Hereinafter, the "reactions represented by the reaction formulae (r-a), (r-b), and (r-c)" will be respectively referred to as "reactions (r-a), (r-b), and (r-c)" in some cases. Further, the "compounds represented by the formulae (A), (B), (C), and (D)" will be respectively referred to as "compounds (A), (B), (C), and (D)" in some cases. In the case where R¹ and R² each represent a methyl group, the compound (D) is C.I. Pigment Red 122. In the case where R¹ and R² each represent a hydrogen atom, the compound (D) is C.I. Pigment Violet 19.

In the reaction (r-a), the compound (B) is obtained from the compound (A). Subsequently, in the reaction (r-b), 1 molar equivalent of compound (B) and 2 molar equivalents of aniline derivative are reacted with each other to obtain 1 molar equivalent of compound (C). Subsequently, in the reaction (r-c), the compound (C) is oxidized to obtain an oxide of the compound (C). Subsequently, in the reaction (r-c), the oxide of the compound (C) is hydrolyzed to obtain a hydrolysate. Subsequently, in the reaction (r-c), the hydrolysate is subjected to a dehydration ring-closure reaction using a phosphorus-containing catalyst to obtain the compound (D). The reaction temperature of the dehydration ring-closure reaction is, for example, 90°C or more and 120°C or less. The reaction time of the dehydration ring-closure reaction is, for example, 1 hour or more and 2 hours or less.

The phosphorus-containing catalyst used in the reaction (r-c) is, for example, at least one selected from the group consisting of polyphosphoric acid and a derivative thereof. Examples of the derivative of polyphosphoric acid include polyphosphoric acid ester, more specifically, polyphosphoric acid alkylester. As the polyphosphoric acid alkylester, polyphosphoric acid methylester is favorable.

After carrying out the above reaction (r-c), the quinacridone pigment may be subjected to, for example, a solvent treatment process (hereinafter, referred to as a process A in some cases) and a post-treatment process (hereinafter, referred to as a process B in some cases). The process A is a process of decreasing the particle size, and high colorability and high saturation are achieved. The process B is a process of suppressing the agglomeration of quinacridone pigments due to the decrease in the particle size in the process A. By carrying out the process A and the process B, a fine quinacridone pigment having excellent dispersibility and preservation stability can be obtained.

In the process A, the quinacridone pigment is treated with a solvent. The quinacridone pigment before the process A is carried out is referred to also as a crude, and is an agglomerated particle with a low degree of crystallization. The quinacridone pigment before the process A is carried out has insufficient colorability. In this regard, by carrying out the process A, the crystal growth of the quinacridone pigment and the micronization of the quinacridone pigment are promoted. By promoting the crystallization and micronization of the quinacridone pigment, the colorability and saturation of the quinacridone pigment are made suitable. More specifically, by carrying out the process A, the crude of the quinacridone pigment is converted into the β-type or γ-type crystal of the quinacridone pigment, and the colorability and saturation of the quinacridone pigment are improved. Examples of the method of treating the quinacridone pigment include a method of kneading a quinacridone pigment and a solvent using a kneader (e.g., a salt milling kneader). The temperature and time for treating the quinacridone pigment are not particularly limited, and only need to be set appropriately to achieve a desired particle diameter and particle size distribution of the quinacridone pigment. The process A may be carried out while heating the quinacridone pigment. Further, in the process A, an inorganic base (more specifically, sodium hydroxide, potassium hydroxide, or the like) may be added as a grinding aid as necessary. A kneaded product of the quinacridone pigment obtained in the process A is washed with water or a solvent as necessary to obtain, for example, a wet cake shape.

In the process B, the kneaded product of the quinacridone pigment obtained in the process A is post-treated. By carrying out the process B, the agglomeration of the micronized quinacridone pigment is suppressed. By carrying out the process B, favorable dispersibility and preservation stability can be imparted to the quinacridone pigment in addition to the colorability and saturation of the quinacridone pigment imparted in the process A. As the post-treatment method, for example, a method of removing the solvent from the kneaded product of the quinacridone pigment to separate the quinacridone pigment is adopted. Examples of the method of separating the quinacridone pigment include filtration, drying, and distilling off of the solvent using a rotary evaporator. In the case where the solvent is distilled off, the temperature for distilling off the solvent is, for example, a temperature of the boiling point of the solvent or more.

The compound (B) and the compound (C) generated during the process of carrying out the reactions (r-a), (r-b), and (r-c) correspond to the above intermediate. When such an intermediate is mixed in the ink, the intermediate having relatively high polarity electrostatically adheres to the ejection surface of the recording head and the inner wall of the nozzle hole in some cases. When the ink is dried and thickened, the adhered intermediate forms aggregates, which can cause misdirection of the ink from the recording head. In this regard, in the ink according to this embodiment, the amount of the intermediate is controlled such that the absorbance at 429 nm in the ultraviolet-visible light absorption spectrum of the 25-fold diluted solution of the supernatant liquid is 0.002 or less.

### (Pigment dispersion resin)

The pigment dispersion resin is favorably fine particles of a resin having a molecular weight of several ten thousand from the viewpoint of improving the quality of the image to be formed on the recording medium. Further, the pigment dispersion resin favorably has an acid value of 50 mg KOH/g or more and 300 mg KOH/g or less. Note that the acid value of the pigment dispersion resin is obtained by the measurement according to JIS K 0070: 1992 (Test methods for acid value, saponification value, ester value, iodine value, hydroxyl value and unsaponifiable matter of chemical products).

As the pigment dispersion resin, a known pigment dispersion resin can be appropriately selected and used. The pigment dispersion resin may be either a random polymer or a block polymer. Specific examples of the pigment dispersion resin include polyester, polyurethane, (meth)acrylic acid, a styrene-(meth)acrylic acid copolymer, a styrene-maleic acid copolymer, a styrene-maleic acid half ester copolymer, a vinyl naphthalene-(meth)acrylic acid copolymer, and a vinyl naphthalene-maleic acid copolymer. The styrene-(meth)acrylic acid copolymer is a resin including a unit derived from styrene and a unit derived from (meth)acrylic acid, (meth)acrylic acid ester, or methacrylic acid ester. Examples of the styrene-(meth)acrylic acid copolymer include a styrene-(meth)acrylic acid-(meth)acrylic acid alkyl ester copolymer, a styrene-methacrylic acid-methacrylic acid alkyl ester-(meth)acrylic acid alkyl ester copolymer, a styrene-(meth)acrylic acid copolymer, a styrene-maleic acid-(meth)acrylic acid alkyl ester copolymer, a styrene-methacrylic acid copolymer, and a styrene-methacrylic acid alkyl ester copolymer. Of these pigment dispersion resins, a styrene-(meth)acrylic acid copolymer is favorable because it is easy to prepare and has an excellent dispersion effect of the quinacridone pigment.

### (Aqueous medium)

The aqueous medium is a medium including water. The aqueous medium may function as a solvent or a dispersion medium. Examples of the aqueous medium include a medium including water and an organic solvent. In order to enhance the compatibility with water, the organic solvent included in the aqueous medium is favorably a water-soluble organic solvent. The water-soluble organic solvent is an organic solvent that is uniformly mixed with water at an arbitrary ratio.

Examples of the water-soluble organic solvent include a glycol compound, a triol compound, a glycol ether compound, a lactam compound, a nitrogen-containing compound, an acetate compound, γ-butyrolactone, thiodiglycol, and dimethylsulfoxide.

Examples of the glycol compound include ethylene glycol, 1,3-propanediol, propylene glycol, 1,3-butanediol, 1,2-pentanediol, 1,5-pentanediol, 1,2-hexanediol, 1,2-octanediol, 1,8-octanediol, 3-methyl-1,3-butanediol, 3-methyl-1,2-pentanediol, 3-methyl-1,5-pentanediol, 2,4-diethyl-1,5-pentanediol, 2-butyl-2-ethyl-1,3-propanediol, diethylene glycol, dipropylene glycol, trimethylene glycol, triethylene glycol, tripropylene glycol, tetraethylene glycol, 2-ethyl-1,2-hexanediol, and thiodiglycol. As the glycol compound, 3-methyl-1,5-pentanediol is favorable.

Examples of the triol compound include glycerin, 1,2,3-butanetriol, and 1,2,6-hexanetriol. As the triol compound, glycerin is favorable.

Examples of the glycol ether compound include diethylene glycol diethyl ether, diethylene glycol monoethyl ether, diethylene glycol monobutyl ether, ethylene glycol monomethyl ether, ethylene glycol monobutyl ether, diethylene glycol monomethyl ether, diethylene glycol monoethyl ether, diethylene glycol diethyl ether, triethylene glycol monomethyl ether, triethylene glycol monoethyl ether, triethylene glycol monobutyl ether, and propylene glycol monomethyl ether. As the glycolether compound, triethylene glycol monobutylether is favorable.

Examples of the lactam compound include 2-pyrrolidone and N-methyl-2-pyrrolidone.

Examples of the nitrogen-containing compound include 1,3-dimethylimidazolidinone, formamide, and dimethylformamide.

Examples of the acetate compound include diethylene glycol monoethyl ether acetate.

As the aqueous medium, a mixed solvent of water, triethylene glycol monobutyl ether, 3-methyl-1,5-pentanediol, and glycerin is favorable.

In the ink according to this embodiment, the content of the water-soluble organic solvent is favorably 10 mass% or more and 40 mass% or less, more favorably 20 mass% or more and 30 mass% or less. In the ink, the content of the aqueous medium is favorably 30 mass% or more and 95 mass% or less, more favorably 70 mass% or more and 95 mass% or less.

### (Other components)

In the ink according to this embodiment, components other than the above may be blended as necessary. For example, in the ink according to this embodiment, a surfactant may be blended. The surfactant has the effect of enhancing the wettability of the ink on a recording medium and the effect of enhancing the compatibility and dispersion stability of each component included in the ink. Examples of the surfactant blended in the ink according to this embodiment include an anionic surfactant, a cationic surfactant, a non-ionic surfactant, and an amphoteric surfactant. The surfactant is favorably a non-ionic surfactant. The non-ionic surfactant is favorably a surfactant having an acetylene bond, more favorably a surfactant having an acetylene glycol structure or an acetylene alcohol structure.

Further, in the ink according to this embodiment, various additives such as a penetrating agent, a dissolution stabilizer, an anti-drying agent, an antioxidant, a viscosity adjustor, a pH adjuster, a neutralizer, and an antifungal agent may be blended as necessary in addition to the surfactant.

### [Inkjet recording apparatus]

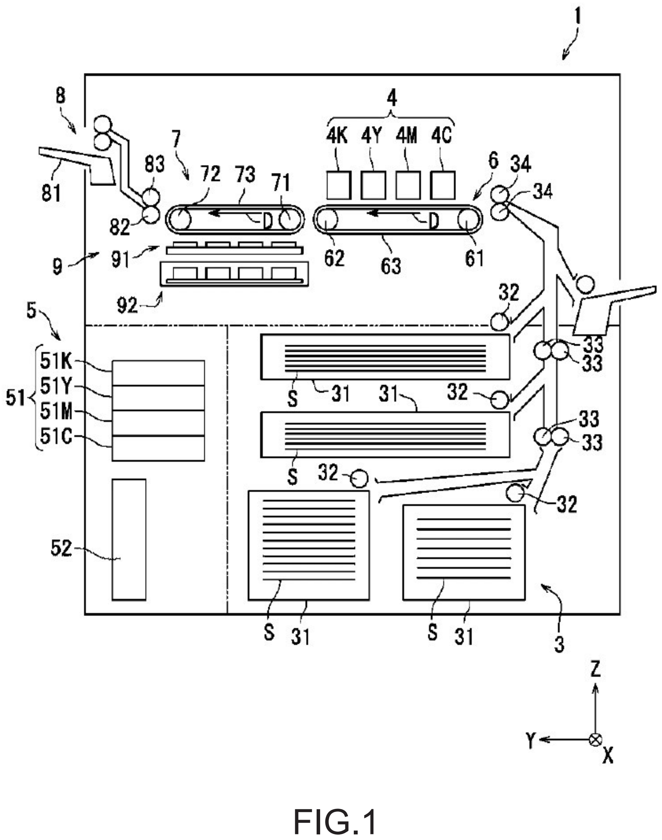

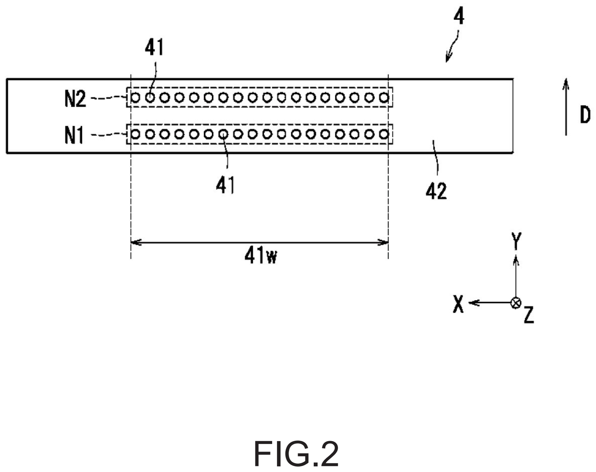

An inkjet recording apparatus 1 according to an embodiment of the present disclosure forms an image on a recording medium using the inkjet ink according to the above embodiment. Fig. 1 is a diagram showing the inkjet recording apparatus 1. The X-axis, Y-axis, and Z-axis shown in Fig. 1 and Fig. 2 described below define a common Cartesian coordinate system. Note that Fig. 1 and Fig. 2 schematically show the respective components mainly for ease of understanding, and the size, number, and the like of the illustrated components differ from the actual ones in some cases.

The inkjet recording apparatus 1 includes a paper feed unit 3, a first recording head 4C, a second recording head 4M, a third recording head 4Y, a fourth recording head 4K, a liquid housing unit 5, a first conveying unit 6, a second conveying unit 7, an output unit 8, and a maintenance unit 9. Hereinafter, in the case where there is no need to distinguish between the first recording heads 4C to the fourth recording head 4K, they will be referred to simply as "recording heads 4" in some cases.

The paper feed unit 3 includes a plurality of paper feed cassettes 31, a plurality of pick-up rollers 32, a plurality of conveying rollers 33, and a resist roller pair 34. Recording media S are stacked and housed in the paper feed cassette 31. The pick-up roller 32 takes out the recording media S housed in the paper feed cassette 31 one by one. The conveying roller 33 conveys the recording medium S taken out by the pick-up roller 32. The resist roller pair 34 causes the recording medium S conveyed by the conveying rollers 33 to be left in place temporarily and then supplies it to the first conveying unit 6 at predetermined timing.

The recording heads 4 are disposed above a first conveyor belt 63. The first recording head 4C to the fourth recording head 4K are arranged in this order in a conveying direction D of the recording medium S. Each of the first recording head 4C to the fourth recording head 4K is disposed at the same height. The first recording head 4C to the fourth recording head 4K are filled with inks of four different colors (e.g., cyan, magenta, yellow, and black). The ink deposited in the second recording head 4M is the ink according to this embodiment, which is magenta. The recording heads 4 eject the respective inks to the recording medium S. Of the recording heads 4, the second recording head 4M ejects the ink according to the above embodiment, which is magenta, onto the recording medium S. As a result, an image (e.g., a color image) is formed on the recording medium S conveyed by the first conveyor belt 63.

Since the ink according to the above embodiment is used, the inkjet recording apparatus 1 exhibits excellent ejection stability of the ink from the second recording head 4M, excellent rubfastness of the image formed on the recording medium, and excellent redissolvability of the ink in the cleaning solution during the maintenance of the ejection surface of the second recording head 4M.

The liquid housing unit 5 includes a first ink tank 51C, a second ink tank 51M, a third ink tank 51Y, a fourth ink tank 51K, and a cleaning solution tank 52. Hereinafter, in the case where there is no need to distinguish between the first ink tank 51C to the fourth ink tank 51K, they will be referred to simply as "ink tanks 51" in some cases. In the first ink tank 51C to the fourth ink tank 51K, inks of different four colors (e.g., cyan, magenta, yellow, and black) are housed. The ink housed in the second ink tank 51M is the ink according to this embodiment, which is magenta. The first ink tank 51C to the fourth ink tank 51K respectively supply the inks to the first recording head 4C to the fourth recording head 4K. The cleaning solution tank 52 supplies a cleaning solution to a liquid impregnated body 91.

The first conveying unit 6 is disposed downstream of the paper feed unit 3 in the conveying direction D of the recording medium S. The first conveying unit 6 includes a first driven roller 61, a first drive roller 62, and the first conveyor belt 63. The first drive roller 62 is disposed downstream of the first driven roller 61 in the conveying direction D of the recording medium S. The first conveyor belt 63 is an endless belt stretched over the first driven roller 61 and the first drive roller 62. The first drive roller 62 is driven to rotate in the counterclockwise direction in Fig. 1. As a result, the first drive roller 62 drives the first conveyor belt 63 in a driven manner. In this way, the first conveyor belt 63 conveys the recording medium S supplied from the paper feed unit 3 to the second conveying unit 7 in the conveying direction D. The first driven roller 61 rotates in accordance with the first drive roller 62 via the first conveyor belt 63.

The second conveying unit 7 is disposed downstream of the first conveying unit 6 in the conveying direction D of the recording medium S. The second conveying unit 7 includes a second driven roller 71, a second drive roller 72, and a second conveyor belt 73. The second drive roller 72 is disposed downstream of the second driven roller 71 in the conveying direction D of the recording medium S. The second conveyor belt 73 is an endless belt stretched over the second driven roller 71 and the second drive roller 72. The second drive roller 72 is driven to rotate in the counterclockwise direction in Fig. 1. As a result, the second drive roller 72 drives the second conveyor belt 73 in a driven manner. In this way, the second conveyor belt 73 conveys the recording medium S conveyed from the first conveying unit 6 to the output unit 8 in the conveying direction D. The second driven roller 71 rotates in accordance with the second drive roller 72 via the second conveyor belt 73.

The output unit 8 is disposed downstream of the second conveying unit 7 in the conveying direction D of the recording medium S. The output unit 8 includes an output tray 81, an output drive roller 82, and an output driven roller 83. The output drive roller 82 and the output driven roller 83 are pressed against each other at positions facing each other. The output drive roller 82 is driven to rotate in the counterclockwise direction in Fig. 1. The output driven roller 83 rotates in accordance with rotation of the output drive roller 82. In this way, the output drive roller 82 and the output driven roller 83 outputs the recording medium S conveyed from the second conveying unit 7 to the output tray 81. The output recording medium S is placed on the output tray 81.

The maintenance unit 9 includes the liquid impregnated body 91 and a cleaning member 92. The liquid impregnated body 91 and the cleaning member 92 are provided so as to be movable between a position below the second conveying unit 7 and a position in contact with an ejection surface 42 (see Fig. 2) of the recording head 4. The liquid impregnated body 91 is impregnated with the cleaning solution. The liquid impregnated body 91 comes into contact with the ejection surface 42 (see Fig. 2) of the recording head 4 to supply the cleaning solution to the ejection surface 42. The liquid impregnated body 91 is, for example, a sponge, a non-woven fabric, or a water-absorbent sheet. The cleaning member 92 wipes the ejection surface 42 of the recording head 4. As a result, the ink adhering to the ejection surface 42 is cleaned. The cleaning member 92 is, for example, a rubber wiper.

Next, the recording head 4 will be further described with reference to Fig. 2. Fig. 2 is a diagram showing the lower surface of the recording head 4 shown in Fig. 1.

As shown in Fig. 2, the recording head 4 includes a first nozzle column N1, a second nozzle column N2, and the ejection surface 42. For ease of understanding, in Fig. 2, each of the first nozzle column N1 and the second nozzle column N2 is surrounded by a broken line. Each of the first nozzle column N1 and the second nozzle column N2 includes a plurality of nozzles 41. The nozzle 41 ejects an ink onto the recording medium S. The nozzle 41 opens into the ejection surface 42. The first nozzle column N1 and the second nozzle column N2 are arranged in the conveying direction D of the recording medium S. In each of the first nozzle column N1 and the second nozzle column N2, the plurality of nozzles 41 is provided at intervals in a direction orthogonal to the conveying direction D of the recording medium S. The recording head 4 is, for example, a line type recording head.

A width 41w of each of the first nozzle column N1 and the second nozzle column N2 (that is, the width of the region where recording is possible by the recording head 4) is equal to or wider than the width of the recording medium S. For this reason, the recording head 4 is capable of recording an image on the recording medium S conveyed on the first conveyor belt 63 while being fixed. That is, the inkjet recording apparatus 1 employs a single-pass system that is a system in which shuttle movement is not performed. Since the inkjet recording apparatus 1 according to the second embodiment includes such a recording head 4, printing can be performed at high speed as compared with an inkjet recording apparatus that includes a serial head.

Note that the inkjet recording apparatus 1 does not necessarily need to have the above configuration. The inkjet recording apparatus 1 may adopt a multi-pass system. Further, in the inkjet recording apparatus 1, the number of nozzles 41, the intervals between the nozzles 41, and the positional relationship between the nozzles 41 in the first recording head 4C to the fourth recording head 4K may be appropriately set in accordance with the specifications of the apparatus. Further, the arrangement order of the first recording head 4C to the fourth recording head 4K in the inkjet recording apparatus 1 is not limited to that shown in Fig. 1, and may be other order. Further, the number of recording heads 4 in the inkjet recording apparatus 1 is not limited to four, and may be one to three, or five or more.

### [Examples and Comparative Examples]

Inks were prepared and evaluated as Examples and Comparative Examples of the present disclosure. Note that the following Examples are merely illustrative examples of the present disclosure, and the present disclosure is not limited to the configurations of the following Examples.

### (Preparation of inks)

In Examples and Comparative Examples, first, a pigment dispersion liquid was prepared. The pigment dispersion liquid was prepared by blending a quinacridone pigment, a pigment dispersion resin, sodium hydroxide, OLFINE (registered trademark) E1010, and water such that the content shown in Table. 1 was achieved, and dispersing the obtained mixture.

**(Table 1)**

| Component | Content (mass%) |
|---|---|
| Quinacridone pigment | 15 |
| Pigment dispersion resin | 6.0 |
| Sodium hydroxide | 0~0.1 |
| OLFINE E1010 | 0.5 |
| Water | Remainder |

Sodium hydroxide was blended as a neutralizer for neutralizing the pigment dispersion resin. OLFINE (registered trademark) E1010 is blended as a dispersant for enhancing the dispersibility of the quinacridone pigment in the aqueous medium, and is a nonionic surfactant manufactured by Nissin Chemical Co., Ltd. In all of Examples and Comparative Examples, C.I. Pigment Red 122 was used as the quinacridone pigment and a methacrylic acid-methyl methacrylate-butyl acrylatestyrene copolymer (a molecular weight: 20,000, an acid value: 100 mg KOH/g) was used as the pigment dispersion resin.

The pigment dispersion liquid was prepared by blending the above components by wet dispersion using a media-type wet disperser. Examples of the media-type wet disperser include a wet disperser (more specifically, "Nano Grain Mill" manufactured by ASADA IRON WORKS. CO., LTD., "MSC mill" manufactured by NIPPON COKE & ENGINEERING. CO., LTD., "DYNO (registered trademark)-MILL" manufactured by Shinmaru Enterprises Corporation, and the like). The time of the dispersion treatment was 30 minutes or more and 120 minutes or less.

In the wet dispersion using a media-type wet disperser, media (zirconia beads having a diameter of 0.5 mm) were set in a vessel, and the ejection rate was controlled to be 300 to 400 g/min such that the average particle diameter of the pigment dispersion in which the dispersant had adhered to the quinacridone pigment dispersed in water was 90 to 140 nm. For measurement of the particle size distributions of the pigment dispersion, a diluted solution obtained by diluting the pigment dispersion liquid 300 times with ion exchanged water was measured using "Zetasizer Nano" manufactured by Sysmex Corporation.

In order to reduce the amount of the unadsorbed resin in the ink, the pigment dispersion liquid was subjected to a centrifugal process and a substitution process as appropriate. In the centrifugal process, the pigment dispersion liquid is centrifuged to precipitate the pigment dispersion in the pigment dispersion liquid. Meanwhile, the unadsorbed resin that is free in the aqueous medium does not easily settle even with the centrifugation, and most of it remains as the supernatant liquid. For this reason, the centrifugal treatment allows the adsorbed resin and the unadsorbed resin in the pigment dispersion resin to be separated. The conditions for the centrifugal process can include, for example, a rotational speed of 10000 rpm or more and 200000 rpm or less and the centrifugation time of 12 hours or more and 48 hours or less.

In the substitution process, the precipitate is isolated from the pigment dispersion liquid and dispersed in another aqueous medium. By the centrifugal process and the substitution process, a pigment dispersion liquid in which most of the unadsorbed resin that is free in the aqueous medium is removed can be obtained. In this way, the amount of the unadsorbed resin included in the ink can be reduced. As the aqueous medium used in this process, water is favorable. Further, by the centrifugal process and the substitution process, the amount of the intermediate in the pigment dispersion liquid and the amount of the phosphorus-containing catalyst can also be reduced.

Further, in order to reduce the amount of the phosphorus-containing catalyst in the ink, the pigment dispersion liquid was subjected to ultrafiltration as appropriate. The ultrafiltration removes at least part of the phosphorus-containing catalyst and reduces the phosphorus concentration in the pigment dispersion liquid. As the cut-off molecular weight of the ultrafiltration film used for ultrafiltration in order to remove at least part of the phosphorus-containing catalyst, a cut-off molecular weight that allows at least part of the phosphorus-containing catalyst to be removed and does not filter the other components of the pigment dispersion liquid is favorably selected. In order to effectively reduce the phosphorus concentration, the circulation time for ultrafiltration is favorably 0.4 hours or more. In order to ensure the redispersibility of the ink in the cleaning solution, the circulation time for ultrafiltration is favorably 2.0 hours or less. By the ultrafiltration, the liquid containing the phosphorus-containing catalyst is discharged as filtrate, and the liquid containing the components of the pigment dispersion liquid other than the phosphorus-containing catalyst circulates again as a recovered liquid. By adding the same amount of water as that of the discharged filtrate to the recovered liquid, the solid content concentration of the pigment dispersion liquid can be maintained at a constant level.

Next, inks according to Examples and Comparative Examples were prepared. The inks according to Examples and Comparative Examples were prepared by blending the above pigment dispersion liquid, SURFYNOL (registered trademark) 420, triethylene glycol monobutyl ether, 3-methyl-1,5-pentanediol, glycerin, and water such that the content shown in Table 2 was achieved. SURFYNOL (registered trademark) 420 is a surfactant manufactured by Nissin Chemical Co., Ltd. Triethylene glycol monobutyl ether, 3-methyl-1,5-pentanediol, and glycerin are each a water-soluble organic solvent.

**(Table 2)**

| Component | Content (mass%) |
|---|---|
| Pigment dispersion liquid | 40.0 |
| SURFYNOL 420 | 0.3 |
| Triethylene glycol monobutyl ether | 4.0 |
| 3-methyl-1,5-pentanediol | 20.0 |
| Glycerin | 5.0 |
| Water | Remainder |

In the preparation of the inks according to Examples and Comparative Examples, the components shown in Table 2 were added in order while stirring the solvent using a stirrer. Further, each ink after stirring was filtered using a filter having a pore size of φ5 µm. In this way, it is possible to reduce the amounts of foreign substances, dirt, coarse particles, and the like included in the ink. By varying the conditions and number of times of filtration, the amount of coarse particles can be adjusted.

### (Analysis of ink)

### ·Centrifugal treatment

2 g of the ink sealed in a container was centrifuged at the rotation speed of 140,000 rpm (corresponding to the centrifugal force of 1,050,000 G) for 3 hours under an environment with a temperature of 23°C using an ultracentrifuge ("himac (registered trademark) CS150FNX" manufactured by Eppendorf Himac Technologies Co., Ltd., rotor: S140AT). This precipitated the pigment dispersion included in the ink, thereby obtaining a supernatant liquid.

### ·Acquisition of ultraviolet-visible light absorption spectrum

The supernatant liquid was collected using a 1 mL syringe. The collected supernatant liquid was 25-fold diluted with water and used as a measurement sample. The measurement sample placed in a cell was measured using a spectrophotometer ("U-3000" manufactured by Hitachi High-Tech Corporation) in accordance with the following conditions to acquire an ultraviolet-visible light absorption spectrum of the measurement sample.

The measurement conditions using a spectrophotometer were as follows.
Measurement wavelength range: 200 nm or more and 800 nm or less
Scan speed: 300 nm/min
Sampling interval: 1.00 nm
Slit width: 1 nm
Cell: cell formed of quartz glass
Optical path length: 10 mm
Beam method: double beam
Baseline measurement: with
Reference: ion exchanged water

### ·Measurement of phosphorus concentration

The supernatant liquid was collected using a 1 mL syringe. The collected supernatant liquid was diluted 50 times with water, and this was used as a measurement sample. The measurement sample was measured using an inductively coupled plasma (ICP) mass spectrometer ("iCAP PRO ICP-OES Duo" manufactured by Thermo Fisher Scientific Inc.). The phosphorus concentration was obtained from the measurement value on the basis of the calibration curve.

### ·Ratio of unadsorbed resin

The supernatant liquid obtained from 2 g of the ink was dried at 60°C for 24 hours under a reduced pressure. Then, by measuring the weight after drying under a reduced pressure, the mass of the unadsorbed resin included in the 2 g of the ink was obtained. Then, the ratio (mass%) of the unadsorbed resin in the pigment dispersion resin was obtained from the obtained mass of the unadsorbed resin and the theoretical value of the mass of the pigment dispersion resin included in the 2 g of the ink.

### (Evaluation of ink)

For the inks according to Examples and Comparative Examples, misdirection, internal contamination, rubfastness, and cleanability were evaluated. Note that the evaluation of misdirection and internal contamination corresponds to the evaluation of ejection stability.

### ·Method of evaluating misdirection

As an evaluation device for evaluation, an inkjet recording apparatus (prototype manufactured by KYOCERA Document Solutions Inc.) was used. This evaluation device includes a conveying unit, and a piezoelectric line head including a nozzle (radius of an opening: 10 µm) as a recording head. The ink was set in the recording head for magenta ink of the evaluation device. Plain paper ("C2" manufactured by FUJIFILM Business Innovation Corp., A4-size PPC paper) was used as a sheet of paper.

In the evaluation device, the temperature of the recording head was set to 40°C and the ejection amount of the ink per pixel was set to 3.5 pL. An image (20.5 mm × 29.0 mm) with image processing settings for ejecting the ink from all nozzles of the recording head was continuously printed on sheets of paper for one hour using the evaluation device. The image (initial image) printed at the beginning of the continuous printing and the image (print-durability image) printed at the end of the continuous printing were observed with the naked eye. Then, the amount of white streaks in the initial image and the print-durability image was checked. The white streaks are image defects caused by misdirection of the ink from the recording head. The misdirection of each ink was evaluated in accordance with the following criteria A and B. Inks with the evaluation of A for misdirection are evaluated to "Pass", and inks with the evaluation of B are evaluated to "Fail".
A (Good): No change in the amount of white streaks between the initial image and the print-durability image.
B (Poor): The amount of white streaks is greater in the print-durability image than in the initial image.

### ·Internal contamination

The longer the satellite of liquid droplets of the ink ejected from the recording head, the more likely mist is to form, causing internal contamination more easily. For this reason, the ease of the occurrence of internal contamination in the ink was evaluated using the length of the satellite of liquid droplets of the ink. In the evaluation device, the ejection amount of the ink per pixel was set to 5.5 pL, and the ejection rate of the ink was set to 8 m/s. Ten images of the flying of the ink ejected from the recording head were taken, and the length of the satellite of liquid droplets of the ink was measured for the ten images. For each ink, the maximum value of the length of the satellite was used as an evaluation value for internal contamination. Using the evaluation value of internal contamination of each ink, evaluation was performed in accordance with the following criteria A and B. Inks with the evaluation of A for internal contamination are evaluated to "Pass", and inks with the evaluation of B are evaluated to "Fail".
A (Good): less than 0.3 mm
B (Poor): 0.3 mm or more

### ·Rubfastness

A 4 cm × 5 cm solid image was formed on a recording medium ("C2" manufactured by FUJIFILM Business Innovation Corp., A4-size PPC paper) using the evaluation device. In the formation of the solid image, the ejection amount of the ink was set to 11 pL per pixel. Next, a blank sheet of paper (the above recording medium that is unprinted) was placed on the surface of the recording medium on which the solid image was formed (surface on the solid image side). Next, while applying a load of 1 kg to the blank sheet of paper using a weight, the solid image was rubbed back and forth five times with one surface of the blank sheet of paper. After that, the image density of the non-image forming region where no image was formed of the recording medium on which the solid image was formed was measured using a reflection densitometer ("RD-19" manufactured by X-Rite). The maximum value of the image density measured in the non-image forming region was used as an evaluation value for rubfastness. Using the evaluation value of rubfastness of each ink, evaluation was performed in accordance with the following criteria A and B. Inks with the evaluation of A for rubfastness are evaluated to "Pass", and inks with the evaluation of B are evaluated to "Fail".
A (Good): less than 0.020
B (Poor): 0.020 or more

### ·Cleanability

In the evaluation of cleanability, a wiper with 0.3 cc of the ink applied to its tip was left to stand for 10 minutes and then slid along the ejection surface of the recording head in the outward direction (right direction) to the left side of the nozzle formation region, thereby forming a layer of the ink on the ejection surface. After drying the ink layer formed on the ejection surface by holding it at 45°C for 4 days, a non-woven fabric (" BEMCOT" manufactured by Asahi Kasei Corporation) impregnated with 3 g of a cleaning solution was brought into close contact with the ejection surface and separated after 30 seconds. After that, 0.3 cc of the ink was ejected (purged) onto the ejection surface, and the wiper was slid along the ejection surface in the return direction (left direction) to the right side of the nozzle formation region. After that, the degree of adhesion of the ink on the ejection surface was visually observed. The cleanability of each ink was evaluated in accordance with the following criteria A and B. Inks with the evaluation of A for cleanability are evaluate to "Pass", and inks with the evaluation of B are evaluated to "Fail".
A (Good): No ink adhesion is observed.
B (Poor): Ink adhesion is observed.

### (Examples 1 to 9)

In Examples 1 to 9, inks were prepared by varying the amounts of the unadsorbed resin, the intermediate, the coarse particles, and the phosphorus-containing catalyst. In Examples 1 to 9, the dispersion time during the preparation of the pigment dispersion liquid, the ejection amount, and the circulation time for ultrafiltration were varied. Table 3 shows the dispersion time during the preparation of the pigment dispersion liquid, the ejection amount, and the circulation time for ultrafiltration for Examples 1 to 9. Further, Table 3 shows the maximum absorbance at a wavelength of 300 nm or more and 350 nm or less in the ultraviolet-visible light absorption spectrum of the 25-fold diluted solution of the supernatant liquid, the absorbance at the wavelength of 429 nm, the number of coarse particles, the phosphorus concentration, the average particle diameter of the pigment dispersion, and the ratio of the unadsorbed resin in the pigment dispersion resin for the inks according to Examples 1 to 9.

**(Table 3)**

| | Example | | | | | | | | |
|---|---|---|---|---|---|---|---|---|---|
| | 1 | 2 | 3 | 4 | 5 | 6 | 7 | 8 | 9 |
| Dispersion time (min) | 120 | 120 | 105 | 105 | 90 | 90 | 120 | 105 | 90 |
| Ejection amount (g/min) | 300 | 300 | 300 | 300 | 300 | 300 | 300 | 300 | 300 |
| Circulation time for ultrafiltration (sec) | 40 | 0 | 40 | 60 | 30 | 30 | 40 | 30 | 60 |
| Maximum absorbance at 300 to 350 nm (abs) | 0.20 | 0.27 | 0.16 | 0.21 | 0.35 | 0.16 | 0.16 | 0.30 | 0.30 |
| Absorbance at 429 nm (abs) | 0.002 | 0.001 | 0.001 | 0.002 | 0.001 | 0.001 | 0.001 | 0.002 | 0.002 |
| Number of coarse particles (×10⁸/mL) | 0.30 | 0.10 | 0.50 | 0.80 | 1.20 | 4.00 | 0.80 | 1.10 | 3.80 |
| Phosphorus concentration (ppm) | 9.1 | 14.0 | 5.4 | 6.5 | 12.0 | 16.0 | 8.0 | 11.0 | 6.4 |
| Average particle diameter of pigment dispersion (nm) | 102 | 100 | 110 | 97 | 131 | 130 | 98 | 100 | 120 |
| Ratio of unadsorbed resin (mass%) | 30 | 50 | 20 | 50 | 50 | 30 | 30 | 40 | 40 |

Table 4 shows the evaluation results of misdirection, internal contamination, rubfastness, and cleanability for the inks according to Examples 1 to 9. In all of the inks according to Examples 1 to 9, the misdirection, internal contamination, rubfastness, and cleanability were evaluated to "Pass".

**(Table 4)**

| | Example | | | | | | | | |
|---|---|---|---|---|---|---|---|---|---|
| | 1 | 2 | 3 | 4 | 5 | 6 | 7 | 8 | 9 |
| Misdirection | A | A | A | A | A | A | A | A | A |
| Internal contamination | A | A | A | A | A | A | A | A | A |
| Rubfastness | A | A | A | A | A | A | A | A | A |
| Cleanability | A | A | A | A | A | A | A | A | A |

### (Comparative Examples 1 to 6)

In Comparative Examples 1 to 6, inks in which the amount of at least one of the unadsorbed resin, the intermediate, the coarse particles, or the phosphorus-containing catalyst is different from that in the above Examples were prepared. In Comparative Examples 1 to 6, the dispersion time during the preparation of the pigment dispersion liquid, the ejection amount, and the circulation time for ultrafiltration were varied. Table 5 shows the dispersion time during the preparation of the pigment dispersion liquid, the ejection amount, and the circulation time for ultrafiltration for Comparative Examples 1 to 6. Further, Table 5 shows the maximum absorbance at a wavelength of 300 nm or more and 350 nm or less in the ultraviolet-visible light absorption spectrum of the 25-fold diluted solution of the supernatant liquid, the absorbance at the wavelength of 429 nm, the number of coarse particles, the phosphorus concentration, the average particle diameter of the pigment dispersion, and the ratio of the unadsorbed resin in the pigment dispersion resin for the inks according to Comparative Examples 1 to 6.

**(Table 5)**

| | Comparative Example | | | | | |
|---|---|---|---|---|---|---|
| | 1 | 2 | 3 | 4 | 5 | 6 |
| Dispersion time (min) | 90 | 30 | 120 | 120 | 120 | 30 |
| Ejection amount (g/min) | 300 | 300 | 300 | 400 | 300 | 300 |
| Circulation time for ultrafiltration (sec) | 0 | 0 | 30 | 0 | 120 | 0 |
| Maximum absorbance at 300 to 350 nm (abs) | 0.16 | 0.20 | 0.12 | 0.50 | 0.18 | 0.20 |
| Absorbance at 429 nm (abs) | 0.001 | 0.002 | 0.001 | 0.002 | 0.001 | 0.010 |
| Number of coarse particles (×10⁸/mL) | 4.00 | 5.20 | 7.20 | 1.20 | 1.20 | 210.0 |
| Phosphorus concentration (ppm) | 31.0 | 11.0 | 6.0 | 7.2 | 0.3 | 14.0 |
| Average particle diameter of pigment dispersion (nm) | 130 | 135 | 115 | 102 | 100 | 115 |
| Ratio of unadsorbed resin (mass%) | 30 | 40 | 15 | 55 | 20 | 30 |

The ink according to Comparative Example 1 is different from the inks according to the above Examples in that the phosphorus concentration exceeds 16.0 ppm. The ink according to Comparative Example 2 is different from the inks according to the above Examples in that the number of coarse particles exceeds 4.0 × 10⁸/mL. The ink according to Comparative Example 3 is different from the inks according to the above Examples in that the number of coarse particles exceeds 4.0 × 10⁸/mL and the ratio of the unadsorbed resin in the pigment dispersion resin is less than 20 mass%. The ink according to Comparative Example 4 is different from the inks according to the above Examples in that the maximum absorbance at a wavelength of 300 nm or more and 350 nm or less in the ultraviolet-visible light absorption spectrum exceeds 0.40. The ink according to Comparative Example 5 is different from the inks according to the above Examples in that the phosphorus concentration is less than 1.0 ppm and the ratio of the unadsorbed resin in the pigment dispersion resin exceeds 50 mass%. The ink according to Comparative Example 6 is different from the inks according to the above Examples in that the number of coarse particles exceeds 4.0 × 10⁸/mL.

Table 6 shows the evaluation results of misdirection, internal contamination, rubfastness, and cleanability for the inks according to Comparative Examples 1 to 6. In the ink according to Comparative Example 1 in which the amount of the phosphorus-containing catalyst is large, the misdirection was evaluated to "Fail". In the ink according to Comparative Example 2 in which the amount of coarse particles is large, the misdirection and the internal contamination were evaluated to "Fail". In the ink according to Comparative Example 3 in which the amount of coarse particles is large and the ratio of the unadsorbed resin in the pigment dispersion resin is low, the rubfastness was evaluated to "Fail". In the ink according to Comparative Example 4 in which the amount of the unadsorbed resin is large, the misdirection was evaluated to "Fail". In the ink according to Comparative Example 5 in which the amount of the phosphorus-containing catalyst is small and the ratio of the unadsorbed resin in the pigment dispersion resin is high, the cleanability was evaluated to "Fail". In the ink according to Comparative Example 6 in which the amount of coarse particles is large, the internal contamination was evaluated to "Fail".

**(Table 6)**

| | Comparative Example | | | | | |
|---|---|---|---|---|---|---|
| | 1 | 2 | 3 | 4 | 5 | 6 |
| Misdirection | B | B | A | B | A | A |
| Internal contamination | A | B | A | A | A | B |
| Rubfastness | A | A | B | A | A | A |
| Cleanability | A | A | A | A | B | A |

## Claims

1. An inkjet ink, comprising:
a quinacridone pigment; a pigment dispersion resin; and an aqueous medium,
maximum absorbance at a wavelength of 300 nm or more and 350 nm or less in an ultraviolet-visible light absorption spectrum of a 25-fold diluted solution of a supernatant liquid obtained by centrifuging the inkjet ink at 23°C and 140,000 rpm for 3 hours being 0.16 or more and 0.40 or less, absorbance at 429 nm being 0.002 or less,
the number of coarse particles having a particle diameter of 500 nm or more being 4.0 × 10⁸/mL or less, and
a 50-fold diluted solution of the supernatant liquid having a phosphorus concentration of 1.0 ppm or more and 16.0 ppm or less.

2. The inkjet ink according to claim 1, wherein
the pigment dispersion resin includes an adsorbed resin adsorbed on the quinacridone pigment and an unadsorbed resin that is not adsorbed on the quinacridone pigment, and
a ratio of the unadsorbed resin in the pigment dispersion resin is 20 mass% or more and 50 mass% or less.

3. An inkjet recording apparatus (1), comprising:
a conveying unit (6) that conveys a recording medium; and
a line type recording head (4) that ejects an ink onto the recording medium,
the ink including the inkjet ink according to claim 1 or 2.
